# EUROPÄISCHE PATENTANMELDUNG

(11) **EP 2 497 857 A1**
(43) Veröffentlichungstag der Anmeldung: **12.09.2012**
(21) Anmeldenummer: 11001851.2
(22) Anmeldetag: 05.03.2011
(51) Int. Cl.: D06M 13/325, D06M 15/55, D06M 15/564, D06M 15/61, D06M 15/643, D06M 15/653, C08G 18/08, C08G 18/64, C08G 18/58, C08L 63/00, D06M 101/32

(54) **Textile Flächengebilde mit reduzierter Geruchsentwicklung**

(71) Anmelder: Huntsman Textile Effects (Germany) GmbH, 86462 Langweid a. Lech (DE)
(72) Erfinder: Weihrather, Alfred, 86830 Schwabmünchen (DE); Presnitz, Günter, 86830 Schwabmünchen (DE); Braun, Reinhold, 86830 Schwabmünchen (DE)

(57) **Zusammenfassung**

Es werden Gemische beschrieben, welche Umsetzungsprodukte von einem oder mehreren Aminen mit einem oder mehreren Epoxiden und zusätzlich Isocyanate enthalten. Durch Aufbringen solcher Gemische auf textile Flächengebilde, insbesondere Flächengebilde aus Polyesterfasern lässt sich unangenehmer Schweißgeruch nach körperlicher Betätigung verringern oder vermeiden. Die Effekte weisen eine gute Permanenz nach Waschprozessen auf.

## Beschreibung

Es ist bekannt, dass textile Flächengebilde, insbesondere solche aus Polyesterfasern, welche mit dem menschlichen Körper in Kontakt kommen, unangenehmen Geruch aufweisen können. Dies gilt insbesondere, wenn sie menschlichem Schweiß ausgesetzt waren, z.B. infolge sportlicher oder anderer anstrengender körperlicher Betätigung. Dieser unangenehme Geruch lässt sich häufig auch durch Waschen des Textils nicht beseitigen, und er wird sogar vielfach nach mehrmaligem Tragen des Textils und anschließendem Waschen noch stärker.

Zur Lösung des Problems bzw. zur Verringerung der Ausbildung störenden Geruchs wurde bereits versucht, Polyesterartikel mit Bioziden wie antimikrobiell wirksamen Substanzen zu behandeln. Beispiele hierfür sind Silber oder seine Salze oder aromatische Polychlorverbindungen. Der Nachteil der Behandlung mit Bioziden liegt einerseits in schädlichen Auswirkungen auf die Umwelt. Ferner lassen sich vielfach negative Einflüsse auf die menschliche Haut nicht immer ausschließen.

Es bestand daher ein Bedarf nach Produkten, welche ohne Verwendung von Bioziden geeignet sind, die Entwicklung störender unangenehmer Gerüche auf Textilien zu verringern oder ganz zu beseitigen.

Die Aufgabe der vorliegenden Erfindung bestand demgemäß darin, Produkte zur Verfügung zu stellen, welche sich zur Behandlung textiler Flächengebilde, insbesondere aus Polyestermaterialien eignen und durch deren Verwendung es möglich ist, störende Gerüche bei den Textilien zu unterdrücken oder ganz zu beseitigen.

Die Aufgabe der vorliegenden Erfindung bestand ferner darin, textile Flächengebilde zur Verfügung zu stellen, insbesondere Flächengebilde, die vollständig oder zum überwiegenden Teil aus Polyesterfasern bzw. -fäden bestehen und die nach Kontakt mit menschlicher Haut und anschließender Wäsche eine höchstens geringe Tendenz zur Bildung unangenehmen Geruchs aufweisen.

Diese Aufgaben wurden gelöst einerseits durch Umsetzungsprodukte von aliphatischen Monoaminen oder Polyaminen oder von Gemischen solcher Amine mit aliphatischen Monoepoxiden oder Polyepoxiden oder mit Gemischen solcher Epoxide, dadurch gekennzeichnet, dass die Mono- oder Polyamine ausgewählt sind aus
a) nicht-ethoxilierten Aminen der Formel 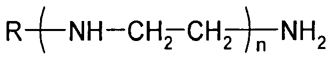 wobei R ein Alkylrest mit 6 bis 24, vorzugsweise 12 bis 18, Kohlenstoffatomen
   ist und n für eine Zahl von 0 bis 10 steht,
b) Polyetheraminen der Formel 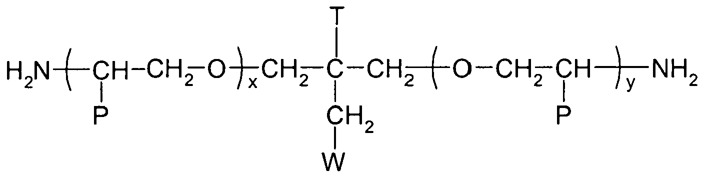 worin P jeweils für H oder CH₃ steht und W für H oder 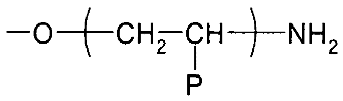 steht
   worin T ein Alkylrest mit 1 bis 6 Kohlenstoffatomen ist und
   worin x, y und z jeweils einen Wert von 0 bis 50 bedeuten und die Summe x+y+z einen Wert von 3 bis 100, vorzugsweise von 5 oder 6, besitzt,
c) aminofunktionellen Polyorganosiloxanen, die sich von Polydialkylsiloxanen dadurch ableiten, dass eine oder mehrere Alkylgruppen in der Polydialkylsiloxankette durch Reste ersetzt sind, welche mindestens eine primäre Aminogruppe enthalten, vorzugsweise durch Reste der Formel 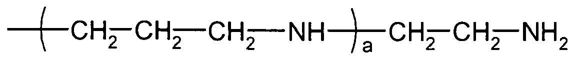 worin a den Wert 0 oder 1 besitzt
   und andererseits durch textile Flächengebilde, welche mit einer flüssigen Zusammensetzung behandelt und anschließend getrocknet und kondensiert wurden, wobei die flüssige Zusammensetzung als Komponente A ein oder mehrere Umsetzungsprodukte gemäß Anspruch 1, 2 oder 3 enthält und als Komponente B mindestens ein Monoisocyanat oder Polyisocyanat oder ein Gemisch solcher Isocyanate enthält, wobei die Isocyanate in freier oder blockierter Form vorliegen können. Gegebenenfalls kann die flüssige Zusammensetzung hierbei einen pH-Wert von weniger als 7 aufweisen, z.B. durch Zusatz von Essigsäure.

Die erfindungsgemäßen textilen Flächengebilde sind vorzugsweise Gewebe oder Maschenware, die zu 50 bis 100 Gew%, vorzugsweise 90 bis 100 Gew%, aus Polyester bestehen.

Polyester enthaltende textile Flächengebilde der oben genannten Art besitzen den Vorteil, dass sie im Gegensatz zu bekannten Textilien nach Kontakt mit menschlichem Schweiß und anschließendem Waschen deutlich weniger zur Bildung unangenehmer Gerüche neigen als bekannte Textilien. Ferner können sie ohne Verwendung von Bioziden hergestellt werden, was Vorteile bezüglich Umwelt und Hautverträglichkeit mit sich bringt. Es erscheint plausibel, dass bei den erfindungsgemäßen Textilien sowohl eine Barriereschicht vorliegt, welche das Eindringen von Schweiß in das Fasermaterial behindert, als auch die Entfernbarkeit von Schweiß durch Waschprozesse erleichtert wird.

Ein weiterer Vorteil der erfindungsgemäßen Textilien besteht darin, dass sie ein ausgesprochen angenehmes Tragegefühl vermitteln.

An Stelle von Polyester können die textilen Flächengebilde auch aus anderen Fasern bestehen, bei denen das Problem störender Geruchsbildung auftritt.

Die Textilien können auch aus Gemischen von Polyesterfasern mit anderen Fasern bestehen. Vorzugsweise sind die Fasern jedoch Polyesterfasern, wobei insbesondere textile Flächengebilde zu erwähnen sind, die zu 100 % Gew% aus Polyethylenterephthalat bestehen. Außer Polyester kommen Fasern aus aliphatischen oder aromatischen Polyamiden in Betracht.

Die erfindungsgemäßen Textilien bestehen vorzugsweise zu 50 bis 100 Gew%, insbesondere zu 90 bis 100 Gew% aus Polyesterfasern. Unter den Begriff "Polyesterfasern" fallen hierbei sowohl Endlosfäden als auch Stapelfasern bzw. Spinnfasern. Falls die erfindungsgemäßen Textilien nicht zu 100 Gew% aus Polyester bestehen, kann der Rest aus anderen Fasern wie z.B. Baumwollfasern, Elasthanfasern oder Polyamidfasern bestehen.

Die verwendeten Polyesterfasern bestehen vorzugsweise aus Polyethylenterephthalat (PET). Es können jedoch auch andere Polyester verwendet oder - im Gemisch mit PET - mitverwendet werden.

Die erfindungsgemäßen textilen Flächengebilde sind vorzugsweise Gewebe oder Maschenware. Sie können bevorzugt zur Herstellung von Artikeln verwendet werden, welche beim Gebrauch mit menschlicher Haut in Berührung kommen. Beispiele sind Sport- oder Arbeitsbekleidung.

Die Ursache für die Reduzierung störenden Geruchs bei den erfindungsgemäßen textilen Flächengebilden liegt möglicherweise in der Oberflächenstruktur bzw. -morphologie der behandelten Flächengebilde.

Die flüssige Zusammensetzung, welche auf die textilen Flächengebilde aufgebracht wird, ist aus Umwelt- und Kostengründen vorzugsweise eine wässrige Flotte. Es können gegebenenfalls aber auch Zusammensetzungen in organischen Lösungsmitteln oder Lösungsmittelgemischen verwendet werden.

Die Applikation der flüssigen Zusammensetzungen auf die textilen Flächengebilde erfolgt vorzugsweise über einen Foulard-Prozeß. Hierbei können übliche, aus der Textilindustrie bekannte Flottenkonzentrationen verwendet werden. Die Konzentration der Flotte, vorzugsweise der wässrigen Flotte, beim Foulard-Prozeß sowie die anderen Foulard-Bedingungen werden vorzugsweise so eingestellt, dass sich nach der Kondensation eine Auflage von 0,5 bis 3 Gew% auf dem Flächengebilde befindet, bezogen auf wasserfreies und lösungsmittelfreies Produkt.

Nach der Foulardierung werden die Textilien getrocknet und kondensiert.

Die Trocknung verläuft vorzugsweise bei einer Temperatur im Bereich von 100 bis 120°C. Die Kondensation dient unter anderem der Verankerung der Produkte auf der Faser und wird im Fall von Flächengebilden aus Polyester vorzugsweise bei einer Temperatur im Bereich von 140 bis 180°C durchgeführt.

Es kann angenommen werden, dass bei der Kondensation der Textilien aus den erfindungsgemäßen Umsetzungsprodukten (Komponente A), den Isocyanaten (Komponente B) und dem Textilmaterial Materialien entstehen, durch welche die guten geruchshemmenden Eigenschaften des Textils hervorgerufen werden.

Zur Herstellung erfindungsgemäßer textiler Flächengebilde werden Flächengebilde aus Fasermaterialien mit einer flüssigen Zusammensetzung behandelt, getrocknet und kondensiert.

Die flüssige Zusammensetzung enthält mindestens als Komponente A ein erfindungsgemäßes Umsetzungsprodukt aus aliphatischem Amin und aliphatischem Epoxid und mindestens ein Monoisocyanat oder Polyisocyanat als Komponente B. Sie kann jedoch auch mehrere Produkte enthalten, welche unter die unten aufgeführte Definition von Komponente A fallen und/oder mehrere Produkte, welche unter die Definition von Komponente B fallen.

Komponente A enthält mindestens ein Umsetzungsprodukt von aliphatischem Monoamin oder Polyamin oder von Gemischen solcher Amine mit aliphatischem Monoepoxid oder Polyepoxid oder mit Gemischen solcher Epoxide.

Komponente B enthält mindestens ein Monoisocyanat oder Polyisocyanat oder ein Gemisch solcher Isocyanate. Die entsprechenden Isocyanate können in freier oder in vollständig oder teilweise blockierter Form vorliegen. Im letzteren Fall werden als Blockierungsmittel bekannte Produkte verwendet, vorzugsweise Ketonoxime wie Butanonoxim. Die Blockierung ist bei erhöhter Temperatur, z.B. bei der Temperatur der Kondensation, reversibel.

Die Amine, welche mit Epoxiden umgesetzt werden, um Komponente A zu erhalten, sind aliphatische Mono- oder Polyamine oder Gemische solcher Amine. Die Epoxide sind hierbei ebenfalls aliphatische Verbindungen, nämlich aliphatische Mono- oder Polyepoxide. Unter "Polyaminen" oder "Polyepoxiden" sind hierbei Produkte zu verstehen, welche 2 oder mehr Amino- bzw. Epoxygruppen im Molekül enthalten. Aromatische Gruppen enthaltende Amine oder aromatische Gruppen enthaltende Expoxide sind weniger oder überhaupt nicht geeignet.

Zur Herstellung erfindungsgemäßer Umsetzungsprodukte (Komponente A) werden Mono- oder Polyamine verwendet, welche mindestens eine primäre Aminogruppe enthalten. Es können daneben zusätzlich auch sekundäre Aminogruppen vorliegen.

Die Umsetzung der Amine mit Mono- oder Polyepoxiden wird vorzugsweise unter solchen Bedingungen durchgeführt, dass das entstehende Produkt noch freie Aminogruppen enthält. Sie kann ohne oder mit Verwendung eines Lösungsmittels erfolgen, vorzugsweise bei einer Temperatur im Bereich von 70°C bis 130°C und in solchen Mengen, dass nach der Umsetzung ein Produkt resultiert, das noch freie Aminogruppen aufweist.

Als Amine sind besonders geeignet a) längerkettige primäre oder sekundäre aliphatische Mono- oder Polyamine, der Formel

R-(-NH-CH₂CH₂-)ₙ-NH₂

wie z.B. Stearylamin. Gut geeignet sind auch b) Polyetheramine wie die Produkte der Gamme JEFFAMINE der Firma Huntsman Corp. Produkte der Gamme JEFFAMINE entsprechen der oben genannten Strukturformel b). Sie können hergestellt werden durch Umsetzung von Aminen wie z.B. hydrierten Talgaminen mit Ethylenoxid und/oder Propylenoxid. Ein repräsentatives Beispiel ist JEFFAMINE T 403, das in Merkblättern der Firma Huntsman Corp. beschrieben wird.

Als Amine oder Polyamine können für die Umsetzung mit Mono- oder Polyepoxiden auch c) aminofunktionelle Polyorganosiloxane verwendet werden. Dies sind Polydialkylsiloxane, insbesondere Polydimethylsiloxane, bei denen ein Teil der Alkylgruppen durch aliphatische Rest ersetzt sind, welche ein oder 2 Aminogruppen enthalten. Diese aliphatischen Reste sind vorzugsweise Reste der Formel

-CH₂-CH₂-CH₂-NH-CH₂-CH₂-NH₂

oder der Formel

-CH₂-CH₂-CH₂-NH₂

Besonders gut geeignet und daher bevorzugt als Komponente A sind Produkte, welche durch Umsetzung von mehreren Aminen mit Monoepoxid oder Polyepoxid entstehen und die dadurch gekennzeichnet sind, dass sowohl Amine der unter a) genannten Formel, als auch Amine der unter b) genannten Formel und gegebenenfalls zusätzlich Amine der unter c) genannten Formel bei der Umsetzung verwendet werden, wobei die einzelnen Typen von Aminen bei der Umsetzung als Gemisch oder einzeln nacheinander eingesetzt werden können.

Die Epoxide, welche zur Herstellung der Komponente A verwendet werden, sind aliphatische Mono- oder Polyepoxide, insbesondere mit 1 oder 2 Epoxygruppen. Gut geeignet sind Produkte, welche außer Epoxyfunktionen noch Ethergruppen enthalten. Ein Beispiel ist das Produkt ARALDIT DY-H der Firma Huntsman Corp. Vorzugsweise werden für die Umsetzung Diepoxide der Formel 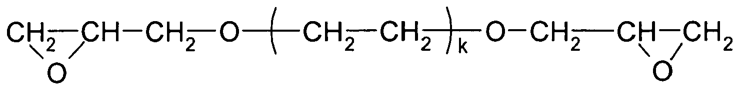 eingesetzt. In dieser Formel ist k eine Zahl von 1 bis 4. An Stelle dieser Diepoxide können auch Diepoxide dieser Formel verwendet werden, in denen jeweils ein Wasserstoffatom der Epoxygruppe durch eine Methylgruppe ersetzt ist.

Die flüssige Zusammensetzung, welche zur Behandlung der textilen Flächengebilde verwendet wird, enthält neben der oben beschriebenen Komponente A noch mindestens eine Komponente B. Diese Komponente B ist ein Monoisocyanat oder ein Polyisocyanat, also ein Produkt mit einer oder mehreren Isocyanatgruppen. Sie kann auch ein Gemisch solcher Isocyanate sein. Im Gegensatz zu Komponente A, die keine aromatischen Gruppen enthält, können in Komponente B auch aromatische Reste vorliegen. Besonders gut geeignet als Komponente B sind aliphatische oder aromatische Diisocyanate oder Gemische von Diisocyanaten. Beispiele hierfür sind unsubstituiertes oder alkylsubstituiertes 1,6-Hexamethylendiisocyanat, 4,4'-Diphenylmethandiisocyanat, 4,4'-Dicyclohexylmethylendiisocyanat oder Toluylendiisocyanat. Als Komponente B sehr gut geeignet sind auch Polyisocyanate, welche Präpolymere oder Präkondensate der oben genannten Isocyanatverbindungen enthalten, die durch Umsetzung mit ein- oder mehrwertigen Alkoholen entstehen und die noch freie Isocyanatgruppen aufweisen. Diese Präpolymeren oder Präkondensate enthalten somit neben freien Isocyanatgruppen noch Urethanbindungen.

Durch die Verwendung von Komponente B wird die Permanenz der auf den erfindungsgemäßen textilen Flächengebilden vorhandenen geruchshemmenden Ausrüstung erhöht, was sich insbesondere nach mehrmaligem Tragen und Waschen dieser Artikel bemerkbar macht.

Ein weiterer Vorteil der erfindungsgemäßen textilen Flächengebilde, die vorzugsweise Gewebe oder Maschenware sind, besteht darin, dass es möglich ist, beim Waschprozeß der Waschflotte Duftstoffe, z.B. Parfüms beizumischen, sodaß Artikel mit angenehmem Geruch erhalten werden können. Dieser erwähnte Waschprozeß beinhaltet im Regelfall zwei Stufen:
In der ersten Stufe (der Reinigungsstufe) werden vom Textil Verunreinigungen und Substanzen entfernt, die schlechte Gerüche hervorrufen. In der zweiten Stufe (der Spülstufe bzw. Weichspülstufe) wird das Textil mit einem handelsüblichen Weichspülmittel behandelt. Setzt man diesem Weichspülmittel Duftstoffe oder Parfüms zu, z.B. Limonen, Citronella, Acetatester, Pinene usw., so ergibt sich der überraschende Befund, dass nach diesem Waschprozeß die Textilien einen angenehmen frischen Duft aufweisen. Dieser Duft ist stärker ausgeprägt als bei nicht-erfindungsgemäß behandeltem Polyestergewebe.

Ferner haben Versuche mit Testpersonen ergeben, dass es möglich ist, durch Behandlung von Polyestermaterial gemäß der Erfindung Textilien zu erhalten, die nach dem Schwitzen und darauffolgenden Abkühlen einen wollähnlichen Charakter an Stelle des typischen Polyester-Tragegefühls aufweisen. Diese Befunde wurden durch entsprechende Messungen bestätigt. Diese Messungen zeigen, dass erfindungsgemäß behandelte Polyestergewebe nach dem Schwitzen der Testperson weniger stark abkühlen und daher ein angenehmeres Tragegefühl vermitteln, das dem von Wolle nahe kommt.

Die erfindungsgemäßen textilen Flächengebilde sind vorzugsweise Gewebe oder Maschenware, insbesondere Textilien, die ganz oder überwiegend aus Polyester bestehen. Sie eignen sich hervorragend zur Herstellung von Artikeln, welche beim Gebrauch mit menschlicher Haut in Berührung kommen. Solche Artikel können Sportbekleidung oder Arbeitskleidung sein. Durch die Verwendung erfindungsgemäßer textiler Flächengebilde lässt sich hierbei der positive Effekt erzielen, dass nach Waschvorgängen das Vorliegen unangenehmen Schweißgeruchs reduziert ist.

Die Erfindung wird nunmehr durch Ausführungsbeispiel veranschaulicht.

### Beispiel 1 (erfindungsgemäß) Herstellung von Amin-/Epoxid-Umsetzungsprodukten

Es wurden mehrere Umsetzungsprodukte von Aminen mit Epoxiden hergestellt. Dabei wurden die im Folgenden beschriebenen Formulierungen 1a) bis 1d) erhalten.

### Beispiel 1a):

77 g Stearylamin, 10 g eines aminofunktionellen Polydimethylsiloxans und 11 g eines Polyetheramins wurden gemischt und das Gemisch auf 100°C bis 110°C erhitzt. Bei dieser Temperatur wurden 95 g eines Diepoxids zugetropft. Nach Abkühlen auf 60°C wurden 24 g Essigsäure, 20 g Dispergatoren und 710 g Wasser zugegeben.

Als Polyetheramin wurde JEFFAMINE T-403 verwendet, das Diepoxid war ein aliphatisches Diepoxid (ARALDIT DY-H), bei dem sich an beiden Enden einer Alkylenkette jeweils eine Diglycidylethergruppe befand. Als Dispergatoren wurde ein Gemisch ethoxilierter Produkte verwendet.

Das erhaltene Produkt wird nachfolgend als "Formulierung 1 a" bezeichnet.

### Beispiel 1b):

Beispiel 1 a wurde wiederholt, wobei jedoch das Gemisch vor dem Zutropfen des Diepoxids nur auf etwa 70°C erwärmt wurde und am Ende des Herstellungsprozesses nicht 710 g Wasser, sondern 680 g zugegeben wurden.

Das erhaltene Produkt wird nachfolgend als "Formulierung 1 b" bezeichnet.

### Beispiel 1c):

76 g Stearylamin, 94 g des gleichen Diepoxids wie in Beispiel 1a), 10 g aminofunktionelles Polydimethylsiloxan und 21 g eines Polyetheramins (JEFFAMINE D-400) wurden bei Raumtemperatur miteinander vermischt. Anschließend wurde das Gemisch auf etwa 100°C erwärmt und anschließend 20 g Dispergator (Gemisch ethoxilierter Produkte), 29 g Essigsäure und dann bei 80°C 250 g Wasser zugegeben. Nach Abkühlen auf Raumtemperatur erhielt man eine hellbeige, leicht trübe Flüssigkeit, die dann auf 20 Gew% Wirksubstanzgehalt verdünnt wurde, um die Viskosität zu reduzieren.

Das erhaltene Produkt wird nachfolgend als "Formulierung 1 c" bezeichnet.

Bei den Beispielen 1a) bis 1c) wurden zwei unterschiedliche aminofunktionelle Polydimethylsiloxane (PDMS) verwendet. Das bei Beispiel 1a) und 1b) eingesetzte PDMS war ein Polymer mit einer linearen Polydimethylsiloxankette, an deren beiden Enden sich jeweils eine Trimethylsilylgruppe befand. Ein Teil der Methylgruppen war durch Aminogruppen enthaltende Seitenketten der Formel

-CH₂-CH₂-CH₂-NH-CH₂-CH₂-NH₂

ersetzt. Der Stickstoffgehalt dieses Silikons betrug etwa 3 Gew%.

Das in Beispiel 1c) verwendete PDMS enthielt ebenfalls eine lineare PDMS-Kette mit -Si(CH₃)₃-Endgruppen und den gleichen Seitenketten wie im Fall von 1a) und 1b) beschrieben. Der Stickstoffgehalt des PDMS von Beispiel 1c) betrug 7,1 Gew%.

### Beispiel 1d):

Im Gegensatz zu den Beispielen 1a) bis 1c) wurde bei 1d) kein aminofunktionelles Silikon verwendet.

155 g Stearylamin, 44 g JEFFAMINE T-403 und 191 g Diepoxid (ARALDIT DY-H) wurden miteinander vermischt und das Gemisch zuerst auf etwa 70°C, dann auf 100 bis 107°C erwärmt. Nach Abkühlen auf Raumtemperatur und erneutem stufenweisem Aufheizen auf 50 - 70°C wurden 39 g Dispergator (Gemisch ethoxilierter Produkte) und 490 g Wasser hinzugefügt.

Das erhaltene Produktgemisch wird nachfolgend als "Formulierung 1 d" bezeichnet.

### Beispiel 2: Bestimmung der ROI-Werte von Gewebeproben aus Polyester

Aus den Formulierungen 1 a bis 1 d wurden durch Hinzufügen eines Produkts bzw. Produktgemischs mit Isocyanatgruppen die entsprechenden "Rezepturen" 2a bis 2k hergestellt.

Das Isocyanatgruppen enthaltende Produktgemisch war ein Präpolymer mit Polyurethangruppen und Isocyanatgruppen, die teilweise durch Umsetzung mit Butanonoxim blockiert worden waren. Das Präpolymer war durch Umsetzung von Diphenylmethandiisocyanat, 1,1,1-Trimethylolpropan, Propylenglykol und N-Methyl-diethanolamin aufgebaut und war ein Produkt, das außerdem Wasser, ethoxilierten Alkohol und geringe Mengen Salzsäure enthielt. Dieses Präpolymer wird nachfolgend als "PP" bezeichnet. Folgende Rezepturen wurden durch Vermischen der nachfolgend genannten Inhaltsstoffe hergestellt: Hierbei bedeutet TDI ein Präpolymer ähnlich PP, aber mit Toluylendiisocyanat statt Diphenylmethandiisocyanat, CDI bedeutet ein Präpolymer ähnlich wie PP, aber mit Dicyclohexylmethylendiisocyanat.
Rezeptur 2a: Formulierung 1d + 10 g/l PP
Rezeptur 2b: Formulierung 1d + 15 g/l TDI
Rezeptur 2c: Formulierung 1d + 15 g/l CDI
Rezeptur 2d: Formulierung 1c + 10 g/l PP + 5 g/l CDI

Rezeptur 2e: Formulierung 1c + 15 g/l TDI
Rezeptur 2f: Formulierung 1c + 25 g/l PP
Rezeptur 2g: Formulierung 1b + 15 g/l CDI
Rezeptur 2h: Formulierung 1b + 10 g/l PP
Rezeptur 2i: Formulierung 1a + 15 g/l CDI
Rezeptur 2j: Formulierung 1a + 15 g/l TDI
Rezeptur 2k: Formulierung 1a + 10 g/l PP

Die Rezepturen 2a bis 2k wurden als wässrige Flotten verwendet, um mittels eines Foulard-Prozesses Proben blau gefärbter Polyester-Gewebe zu behandeln. Anschließend an die Applikation der Rezepturen wurden die einzelnen Gewebeproben bei 100 - 105°C getrocknet und 5 Minuten lang bei etwa 150°C kondensiert. Die Versuche wurden mit unterschiedlichen Gewebeauflagen der einzelnen Rezepturen durchgeführt. Nach der Kondensation wurden die Proben einem Test zur Bestimmung des ROI-Werts unterzogen. Der ROI-(relative odour index)-Wert gibt an, welche Mengen an der nachfolgend genannten "Schweißsäure" sich auf dem Gewebe befinden im Vergleich zu nicht mit den Rezepturen behandelten blauen PES-Geweben. Die bei den Versuchen verwendete "Schweißsäure" ist 3-Methyl-2-hexensäure. Diese Säure kommt im menschlichen Schweiß vor.

Bei der Bestimmung des ROI-Wertes wurde das folgende Verfahren angewandt:
Die Gewebeprobe wird in ein verschließbares Gefäß gegeben. Die Schweißsäure wird auf ein in dem Gefäß befindliches Glasfaserfilter aufgetropft, das nicht in direkter Berührung mit dem Gewebe steht, sodaß sich die Schweißsäure nur im Dampfraum über der Probe befindet. Das Gefäß wird daraufhin verschlossen und bei 37°C 20 Stunden lang konditioniert, sodaß das Gewebe die Schweißsäure aus dem Dampfraum aufnehmen kann. Anschließend wird die Gewebeprobe mit einem handelsüblichen Waschmittel gewaschen und mit einem Gemisch aus Pyridin und BSTFA (N,O-Bis(trimethylsilyl) trifluoracetamid) extrahiert. Die Bestimmung der Menge an Schweißsäure erfolgt dann mittels Gaschromatographie/Massenspektrometrie. Indem man den gefundenen Wert zu dem bei einer unausgerüsteten Polyesterprobe in Beziehung setzt, erhält man den ROI-Wert, der definiert ist als das Verhältnis von extrahierter Schweißsäuremenge an ausgerüstetem PES zu extrahierter Schweißsäuremenge an nicht-ausgerüstetem PES.
Ein kleinerer ROI-Wert bedeutet also, dass sich auf der untersuchten Probe weniger Schweißsäure befand als im Fall eines größeren ROI-Werts.

An den einzelnen Gewebeproben wurde der ROI-Wert nach der Ausrüstung und nach jeweils mehreren Waschvorgängen ermittelt. Die Wäschen wurden bei 40°C unter Verwendung eines handelsüblichen Haushaltswaschmittels durchgeführt.

### Ergebnisse:

| Rezeptur / (Auflage in Gew%) | ROI-Wert ungewaschenes Gewebe | ROI-Wert nach 20 Wäschen |
|---|---|---|
| - (Vergleich: nicht ausge-rüsteter PES) | 1 | 1 |
| 2a / (1,5) | 0,14 | 0,21 |
| 2b / (1,8) | 0,16 | 0,32 |
| 2c / (1,8) | 0,24 | 0,51 |
| 2d / (1,9) | 0,21 | 0,40 |
| 2e / (1,9) | 0,16 | 0,43 |
| 2f / (2,6) | 0,19 | - (nicht bestimmt) |
| 2g / (1,7) | - (nicht bestimmt) | 0,25 |
| 2h / (1,8) | 0,22 | 0,29 |
| 2i / (1,8) | 0,27 | 0,47 |
| 2j / (1,8) | 0,26 | 0,49 |
| 2k / (1,6) | 0,32 | 0,51 |

Es ist deutlich zu erkennen, dass sich von den ausgerüsteten Gewebeproben deutlich weniger Schweißsäure extrahieren lässt als vom nicht-ausgerüsteten Polyester-Gewebe (Vergleichsmaterial). Die gewaschenen Gewebeproben weisen ebenfalls deutlich weniger Schweißsäure (niedrigerer ROI-Wert) auf als das nicht-ausgerüstete Gewebe.

### Beispiel 3 (Trageversuche)

Es wurden 3 T-Shirts aus blau gefärbtem Polyestergewebe in Trageversuchen getestet. Die Gewebe waren mittels wässriger Flotten mit folgenden Rezepturen ausgerüstet worden:
Versuch 3a (erfindungsgemäß): 30 g/l Rezeptur 2a
Vergleich 3b: nicht ausgerüstetes Gewebe
Versuch 3c (erfindungsgemäß): 60 g/l Formulierung 1 c + 10 g/l PP
Vergleich 3d: nicht ausgerüstetes Gewebe
Versuch 3e: (erfindungsgemäß): 60 g/l Formulierung 1 b + 10 g/l PP
Vergleich 3f: nicht ausgerüstetes Gewebe

Die gewaschenen und anschließend mit den Rezepturen der Versuche 3a, 3c und 3e ausgerüsteten T-Shirts wurden getrocknet und kondensiert. Das nicht-ausgerüstete Vergleichsmaterial wurde mit den Gewebeproben aus den Versuchen 3a, 3c bzw. 3e zu T-Shirts zusammengenäht. Diese T-Shirts wurden von verschiedenen Testpersonen bei einer sportlichen Betätigung (Tennisspiel) direkt auf der Haut getragen. Nach intensivem Schwitzen wurden jeweils die beiden Gewebebestandteile der T-Shirts wieder getrennt und jeder der beiden Bestandteile separat in einem verschlossenen Gefäß 2 Tage bei 37°C bzw. bei Raumtemperatur gelagert. Anschließend wurden die Flaschen kurz geöffnet und der Geruch von verschiedenen Testpersonen beurteilt. Anschließend wurden die Proben gewaschen und wieder in die Gefäße gegeben, diese verschlossen und bei 40°C 1 Tag lang gelagert. Die Wäsche wurde mit üblichem Haushaltswaschmittel durchgeführt. Nach dem Öffnen der Gefäße wurde eine zweite Geruchsprüfung von verschiedenen Testpersonen durchgeführt.

### Ergebnisse (Geruchsbeurteilung)

**Tabelle 1 (Versuch 3a, 3b)**

| **Testperson Nr.** | **Versuch 3a (ohne Wäsche)** | **Vergleich 3b (ohne Wäsche)** | **Versuch 3a (nach Wäsche)** | **Versuch 3b (nach Wäsche)** |
|---|---|---|---|---|
| 1 | Schweißgeruch aber weniger als 3b | starker Schweißgeruch | kein Schweißgeruch | Schweißgeruch |
| 2 | Schweißgeruch aber weniger als 3b | starker Schweißgeruch | kein Schweißgeruch | Schweißgeruch |
| 3 | Schweißgeruch aber weniger als 3b | starker Schweißgeruch | kein Schweißgeruch | Schweißgeruch |
| 4 | Schweißgeruch aber weniger als 3b | starker Schweißgeruch | geringer Schweißgeruch | starker Schweißgeruch |
| 5 | Schweißgeruch aber weniger als 3b | starker Schweißgeruch | Schweißgeruch | Schweißgeruch |
| 6 | Schweißgeruch aber weniger als 3b | Schweißgeruch | Schweißgeruch | Schweißgeruch |

**Tabelle 2 Versuch 3c, 3d)**

| **Testperson Nr.** | **Versuch 3c (ohne Wäsche)** | **Vergleich 3d (ohne Wäsche)** | **Versuch 3c (nach Wäsche)** | **Versuch 3d (nach Wäsche)** |
|---|---|---|---|---|
| 1 | kein Schweißgeruch | starker Schweißgeruch | kein Schweißgeruch | geringer Schweißgeruch |
| 2 | sehr geringer Schweißgeruch | Schweißgeruch | kein Schweißgeruch | geringer Schweißgeruch |
| 3 | leichter Schweißgeruch | Schweißgeruch | kein Schweißgeruch | kein Schweißgeruch |
| 4 | leichter Schweißgeruch | starker Schweißgeruch | kein Schweißgeruch | geringer Schweißgeruch |
| 5 | kein Schweißgeruch | Schweißgeruch | kein Schweißgeruch | geringer Schweißgeruch |
| 6 | kein Schweißgeruch | Schweißgeruch | kein Schweißgeruch | kein Schweißgeruch |

**Tabelle 3 (Versuch 3e, 3f)**

| **Testperson Nr.** | **Versuch 3e (ohne Wäsche)** | **Vergleich 3f (ohne Wäsche)** | **Versuch 3e (nach Wäsche)** | **Versuch 3f (nach Wäsche)** |
|---|---|---|---|---|
| 1 | ganz leichter Schweißgeruch | deutlicher Schweißgeruch | kein Schweißgeruch, säuerlich | Schweißgeruch |
| 2 | ganz leichter Schweißgeruch | deutlicher Schweißgeruch | kein Schweißgeruch, säuerlich | Schweißgeruch |
| 3 | ganz leichter Schweißgeruch | starker Schweißgeruch | kein Schweißgeruch, säuerlich | Schweißgeruch |
| 4 | ganz leichter Schweißgeruch | deutlicher Schweißgeruch | kein Schweißgeruch, säuerlich | Schweißgeruch |
| 5 | ganz leichter Schweißgeruch | deutlicher Schweißgeruch | kein Schweißgeruch, säuerlich | fettig |

Es wurden also alle ausgerüsteten T-Shirts von allen Testpersonen als besser bezüglich Schweißgeruch als die nicht ausgerüsteten Vergleichsgewebe beurteilt.

## Patentansprüche

1. Umsetzungsprodukte von aliphatischen Monoaminen oder Polyaminen oder von Gemischen solcher Amine mit aliphatischen Monoepoxiden oder Polyepoxiden oder mit Gemischen solcher Epoxide, **dadurch gekennzeichnet, dass** die Mono- oder Polyamine ausgewählt sind aus
a) nicht-ethoxilierten Aminen der Formel 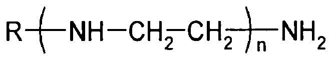 wobei R ein Alkylrest mit 6 bis 24, vorzugsweise 12 bis 18, Kohlenstoffatomen ist und n für eine Zahl von 0 bis 10 steht,
b) Polyetheraminen der Formel 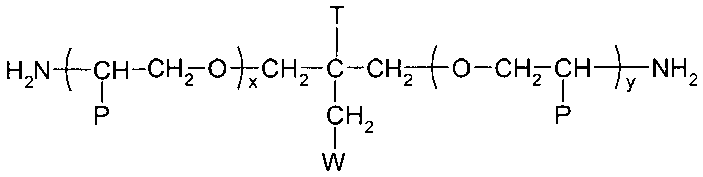 worin P jeweils für H oder CH₃ steht und W für H oder 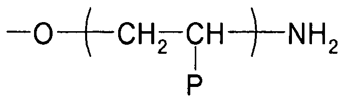 steht
worin T ein Alkylrest mit 1 bis 6 Kohlenstoffatomen ist und
worin x, y und z jeweils einen Wert von 0 bis 50 bedeuten und die Summe x+y+z einen Wert von 3 bis 100, vorzugsweise von 5 oder 6, besitzt,
c) aminofunktionellen Polyorganosiloxanen, die sich von Polydialkylsiloxanen dadurch ableiten, dass eine oder mehrere Alkylgruppen in der Polydialkylsiloxankette durch Reste ersetzt sind, welche mindestens eine primäre Aminogruppe enthalten, vorzugsweise durch Reste der Formel
-CH₂-CH₂-CH₂-NH-CH₂-CH₂-NH₂
oder der Formel
-CH₂-CH₂-CH₂-NH₂

2. Umsetzungsprodukte nach Anspruch 1, welche durch Umsetzung von mehreren Aminen mit Monoepoxid oder Polyepoxid entstehen, **dadurch gekennzeichnet, dass** sowohl Amine der unter a) genannten Formel, als auch Amine der unter b) genannten Formel und gegebenenfalls zusätzlich Amine der unter c) genannten Formel bei der Umsetzung verwendet werden, wobei die einzelnen Typen von Aminen bei der Umsetzung als Gemisch oder einzeln nacheinander eingesetzt werden können.

3. Umsetzungsprodukte nach Anspruch 1 oder 2, **dadurch gekennzeichnet, dass** zur Umsetzung mit Aminen Diepoxide der Formel 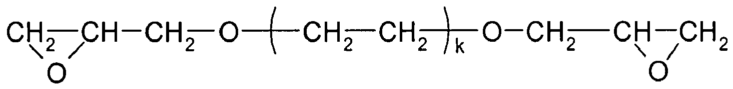 verwendet werden, worin k für eine Zahl von 1 bis 4 steht, oder Diepoxide dieser Formel, in denen jeweils ein Wasserstoffatom der Epoxygruppe durch eine Methylgruppe ersetzt ist.

4. Textile Flächengebilde, welche mit einer flüssigen Zusammensetzung behandelt und anschließend getrocknet und kondensiert wurden, wobei die flüssige Zusammensetzung als Komponente A ein oder mehrere Umsetzungsprodukte gemäß Anspruch 1, 2 oder 3 enthält und als Komponente B mindestens ein Monoisocyanat oder Polyisocyanat oder ein Gemisch solcher Isocyanate enthält, wobei die Isocyanate in freier oder blockierter Form vorliegen können.

5. Flächengebilde nach Anspruch 4, **dadurch gekennzeichnet, dass** die flüssige Zusammensetzung eine wässrige Flotte ist.

6. Flächengebilde nach Anspruch 4 oder 5, **dadurch gekennzeichnet, dass** die textilen Flächengebilde Gewebe oder Maschenware sind, die zu 50 bis 100 Gew%, vorzugsweise 90 bis 100 Gew%, aus Polyester bestehen.

7. Flächengebilde nach einem oder mehreren der Ansprüche 4 bis 6, **dadurch gekennzeichnet, dass** die Trocknung der textilen Flächengebilde bei einer Temperatur im Bereich von 100 bis 120°C und/oder die Kondensation der Flächengebilde bei einer Temperatur im Bereich von 140 bis 180°C durchgeführt wurde.

8. Flächengebilde nach einem oder mehreren der Ansprüche 4 bis 7, **dadurch gekennzeichnet, dass** die textilen Flächengebilde zu 100 Gew% aus Fasern aus Polyethylenterephthalat bestehen.

9. Flächengebilde nach einem oder mehreren der Ansprüche 4 bis 8, **dadurch gekennzeichnet, dass** die Behandlung mit der flüssigen Zusammensetzung so durchgeführt wurde, dass sich nach der Kondensation eine Auflage von 0,5 bis 3 Gew% auf dem Flächengebilde befindet, bezogen auf wasserfreies und lösungsmittelfreies Produkt.

10. Flächengebilde nach einem oder mehreren der Ansprüche 4 bis 9, **dadurch gekennzeichnet, dass** Komponente B ein aliphatisches oder aromatisches Diisocyanat oder ein Gemisch solcher Diisocyanate ist.

11. Verwendung eines textilen Flächengebildes gemäß einem oder mehreren der Ansprüche 4 bis 10 zur Herstellung von Artikeln, welche beim Gebrauch mit menschlicher Haut in Berührung kommen.
